# EUROPEAN PATENT SPECIFICATION

(11) **EP 3 281 825 B1**
(45) Date of publication and mention of the grant of the patent: **24.04.2019**
(21) Application number: 16465525.0
(22) Date of filing: 10.08.2016
(51) Int. Cl.: B60R 1/12

(54) **REAR-VIEW MIRROR UNIT**
RÜCKSPIEGELEINHEIT
UNITÉ DE RÉTROVISEUR

(43) Date of publication of application: 14.02.2018
(73) Proprietor: Continental Automotive GmbH, 30165 Hannover (DE)
(72) Inventor: Gavriliu, Constantina-Elena, 325400 Caransebes (RO)

(56) References cited:
- EP-A2- 1 321 334
- DE-A1-102009 006 109
- JP-A- S60 214 691

## Description

The present invention relates to a rear-view mirror unit, especially for attachment to a vehicle.

US 8,199,975 B2 shows a vehicle with two cameras that, working together, allow for a larger angle of view to the rear of the vehicle. These cameras may be mounted on a rear view mirror or in the housing of a rear-view mirror.

JP S60 214691 A shows a mirror case fixed on a car body, and including a camera arranged behind a mirror.

It is an object of the present invention to improve the known rear-view mirror unit.

According to the invention, the rear-view mirror unit includes a housing for attachment to the vehicle, a mirror that has a semitransparent area and a camera which is positioned behind the mirror in the semitransparent area. The camera is mounted linearly movably within the rear view mirror unit. The linear movement is a more simple movement than the swivelling movement known from prior art. It is less complicated to actuate for the driver and thus provides a higher road safety. The semitransparent area of the mirror extends at least in the range of the linear movement of the camera. In contrast to the swivelling positioning possibility of the known solution, the present invention allows for moving the camera behind the mirror, thus making possible moving the camera out of a temporarily in-transparent area, e.g. due to dirt, dew or other obstacles on the mirror.

The camera further has a wide-angle optics. With the wide-angle optics in the area of 150° to 180°, a small linear movement changes the visible area remarkably. Thus the driver can have a much better view of the area close to the driver's cabin or the front wheel, just by a vertical linear movement of the camera. In case of a horizontal movement, the linear movement allows for adaptation to either a "dead angle area" recognition, or for adaptation to inspection of an area close to the vehicle or the vehicle side area. This is for example a visual checking of closure status of a back door of the vehicle, of the load status, and others. The linear movement of the camera may also be oriented in a different direction then vertical or horizontal. This may improve the size of the visible area.

A rear-view mirror unit according to the invention preferably is provided with a guide element that allows for a rotary movement of the camera in at least an end position of the linear movement of the camera. This allows for an even more increased angle of view. For example, if the rotational movement takes place in the lowermost position of the vertical linear movement in a downward direction, then this gives a view to the bottom area at the side of the drivers cabin up to farther than the front end of the vehicle. This is helpful for example when performing parking manoeuvres. It is also possible to let the camera rotate upwardly in an end position of the linear movement in order to inspect the upper area of the cabin of the vehicle or the upper portion of a trailer attached to the vehicle. This is helpful in order to perform inspection, especially when entering into a tunnel, entering under a bridge or below other objects coming close to the upper end of the vehicle.

Preferably the rear-view mirror unit is provided with a connection cable that is driven through a stand of the mirror. In this case no additional electrical connection is to be arranged outside the vehicle, the outer appearance and the drag, sometimes also referred to as air resistance, do not change.

Preferably the connection element for connecting the camera and the connection cable is arranged behind the mirror. This allows for easy mounting and dismounting of the camera into or out of the rear-view mirror unit. In contrast to a permanent connection, the use of connecting elements allows for more flexibility.

Further advantages of the invention can be found in the following description of figures. The figures show:
- Fig.1: top view of a vehicle equipped with a conventional mirror as well as top view of the vehicle equipped with a rear-view mirror unit according to the invention
- Fig.2: rear-view mirror unit according to the invention
- Fig.3: rear-view mirror unit according to the invention with disassembled mirror and camera
- Fig.4: schematic view of camera arranged behind the mirror
- Fig.5: vehicle equipped with a mirror unit according to the invention

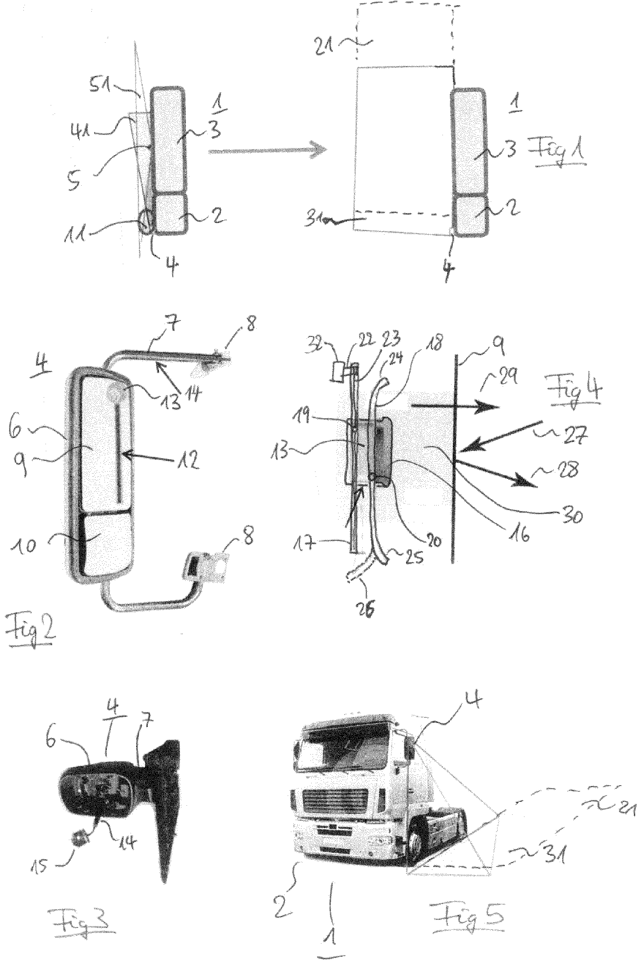

Figure 1 shows on the left side a top view of the vehicle 1 equipped with a conventional mirror, as well as, on the right side, a top view of the vehicle 1 equipped with a rear-view mirror unit 4 according to the invention. The vehicle 1 consists of tractor 2 and trailer 3. The tractor 2 is provided with the rear-view mirror unit 4. The rear-view mirror unit 4 provides a visible area 41. The trailer 3 is provided with a wide angle view camera 5 which is arranged at the side of the trailer 3. The wide angle view camera 5 has a visible area 51 that extends to the side of the vehicle 1. As can be seen, there exists a dead angle zone 11 to which neither the rear-view mirror unit 4 nor the wide-angle view camera 5 provides visible access to. With the rear view mirror unit 4 according to the invention the vehicle 1 reaches a much larger visible area 21 (dashed lines) when the camera is in its upper linear movement position, and visible area 31 (straight lines) when the camera of the rear-view mirror unit 4 is in the lower linear movement position.

Figure 2 shows a rear-view mirror unit 4 according to the invention. It consists of a housing 6 that is attached to a stand 7 which in turn is connectable via connectors 8 to the vehicle 1. On the front side of the housing 6 there are arranged two mirrors 9, 10 of which the upper mirror 9 provides rear-view to the distance, while the lower mirror 10 provides wide-angle rear-view. The upper mirror 9 is provided with a semitransparent area 12 through which the camera 13 can view. The camera 13 as shown in Figure 2 is inclined slightly downwardly and arranged in an angle with regard to the surface of the upper mirror 9 so that range of view extends nearly in the plane of the upper mirror 9 at the one side, and at least parallel to the length direction of the vehicle 1 on the other side. The camera 13 is a wide angle view camera. The camera 13 is at 1st oriented from the top interior corner of the housing 6 to the bottom of the exterior corner. The orientation angle of the camera 13 is computed in order to maximise the field of view. A motor, not shown here, actuates the camera 13 to perform the linear movement from an upper position, as shown in Figure 2, along the semitransparent area 12, down to the lower end of the semitransparent area 12. The user thus has the option of modifying the camera position if his point of interest is other than the default one.

Figure 3 shows the housing 6 of a different type of rear-view mirror unit 4 where mirror and camera are dismounted. The connection cable 14 and a connector 15 extend from the inside of the rear-view mirror unit 4 so that the camera 13 may be attached thereto and still has sufficient freedom for linear movement. The connection cable 14 is driven through the mirror's stand 7 and allows for linear camera sliding. The connection for connecting the camera is available from behind the mirror. The cable side connector 15 is fixed inside the stand 7 while the camera side connector is attached to the camera 13.

Figure 4 shows a schematic side or cut view of the camera 13 arranged behind the mirror 9. The camera 13 has wide angle optics 16 and is affixed to guide rails 17, 18 by means of guide pins 19, 20. A stepper motor 32 and a gear 22 actuate a belt 23 that is connected to guide pin 19 and guided at the upper and lower end of guide rail 17 to extend backwards and being connected to itself to form an endless loop. By this the camera 13 can be actuated to perform the linear movement in vertical direction. At the upper end of guide rail 18 there is provided a curved part 24 that guides the guide pin 20 thus to make the camera 13 rotate upwardly. In the lower part of guide rail 18 there is provided a curved part 25 that also provides for an upward rotation of the camera 13. Alternatively, a curved part 26 that is curved to the back is provided there which makes the camera 13 rotate downwardly in the lowermost position of the linear movement. This downward rotation improves inspection of the ground area, while the upward rotation allows for inspection of an upper area of the vehicle 1 and its surrounding.

An arrow 27 indicates a light beam falling onto the mirror 9, and an arrow 28 indicates light reflected by the mirror 9. An arrow 29 indicates the view direction of the camera 13 through the semitransparent area 12 of the mirror 9. As most of the light falling onto mirror 9 is reflected, the area 30 behind the mirror 9 is mainly dark.

Figure 5 shows the tractor 2 of the vehicle 1 with the rear-view mirror unit 4 according to the invention. Also the visible area 21, 31 is shown. The inventive solution allows for a bigger visible area 21,31, consisting of a combination of visible area 21 and visible area 31. Mounting and replacing the camera 13 can be easily done. The connection cables 14 are short which means reduced cost. Camera nested mirrors as described herein can be used in any mirror based system.

## Claims

1. Rear-view mirror unit including a housing (6) for attachment to the vehicle (1), a mirror (9) having a semitransparent area (12), and a camera (13) positioned behind the mirror (9), **characterized in that** the camera (13) is mounted linearly movably within the rear view mirror unit.

2. Rear-view mirror unit according to claim 1, wherein the camera (13) has a wide angle optics (16).

3. Rear-view mirror unit according to one of the preceding claims, **characterized in that** it is provided with guide element (24, 25, 26) that allows for a rotary movement of the camera (13) in at least an end position of the linear movement of the camera (13).

4. Rear-view mirror unit according to one of the preceding claims, **characterised in that** it is provided with a connection cable (14) that is driven through a stand (7) of the mirror (9).

5. Rear-view mirror unit according to one of the preceding claims **characterised in that** it is provided with camera connector (15) arranged behind the mirror (9).

## Patentansprüche

1. Rückspiegeleinheit, die ein Gehäuse (6) zur Befestigung an dem Fahrzeug (1), einen Spiegel (9) mit einem halbtransparenten Bereich (12) und eine hinter dem Spiegel (9) positionierte Kamera (13) aufweist, **dadurch gekennzeichnet, dass** die Kamera (13) in der Rückspiegeleinheit linear beweglich angebracht ist.

2. Rückspiegeleinheit nach Anspruch 1, wobei die Kamera (13) eine Weitwinkeloptik hat.

3. Rückspiegeleinheit nach einem der vorhergehenden Ansprüche, **dadurch gekennzeichnet, dass** sie mit einem Führungselement (24, 25, 26) versehen ist, das eine Drehbewegung der Kamera (13) in mindestens einer Endposition der linearen Bewegung der Kamera (13) gestattet.

4. Rückspiegeleinheit nach einem der vorhergehenden Ansprüche, **dadurch gekennzeichnet, dass** sie mit einem Verbindungskabel (14) versehen ist, das durch ein Gestell (7) des Spiegels (9) geführt ist.

5. Rückspiegeleinheit nach einem der vorhergehenden Ansprüche, **dadurch gekennzeichnet, dass** sie mit einem Kameraverbinder (15) versehen ist, der hinter dem Spiegel (9) angeordnet ist.

## Revendications

1. Unité de rétroviseur comportant un boîtier (6) destiné à être attaché au véhicule (1), un miroir (9) ayant une zone semi-transparente (12), et une caméra (13) positionnée derrière le miroir (9), **caractérisée en ce que** la caméra (13) est montée de manière déplaçable linéairement à l'intérieur de l'unité de rétroviseur.

2. Unité de rétroviseur selon la revendication 1, dans laquelle la caméra (13) présente une optique grand-angle (16).

3. Unité de rétroviseur selon l'une des revendications précédentes, **caractérisée en ce qu'**elle est pourvue d'un élément de guidage (24, 25, 26) qui permet un mouvement de rotation de la caméra (13) dans au moins une position de fin de course du mouvement linéaire de la caméra (13).

4. Unité de rétroviseur selon l'une des revendications précédentes, **caractérisée en ce qu'**elle est pourvue d'un câble de connexion (14) qui est guidé à travers un support (7) du miroir (9).

5. Unité de rétroviseur selon l'une des revendications précédentes, **caractérisée en ce qu'**elle est pourvue d'un connecteur de caméra (15) disposé derrière le miroir (9).
